# EUROPÄISCHE PATENTSCHRIFT

(11) **EP 3 308 654 B1**
(45) Veröffentlichungstag und Bekanntmachung des Hinweises auf die Patenterteilung: **11.03.2026**
(21) Anmeldenummer: 17001670.3
(22) Anmeldetag: 11.10.2017
(51) Int. Cl.: A23L 13/60, A23L 13/70, A23L 13/40, A23L 13/77

(54) **VERFAHREN ZUM HERSTELLEN VON WÜRSTEN**
METHOD FOR PRODUCING SAUSAGES
PROCÉDÉ DE FABRICATION DE SAUCISSES

(30) Priorität: 11.10.2016 DE 102016012306
(43) Veröffentlichungstag der Anmeldung: 18.04.2018
(73) Patentinhaber: Hornbergs, Karl-Heinz, 47 623 Kevelaer (DE)
(72) Erfinder: Hornbergs, Karl-Heinz, 47 623 Kevelaer (DE)
(74) Vertreter: Schatz, Markus Franz-Josef

(56) Entgegenhaltungen:
- CH-A2- 703 388
- DE-A1- 3 219 005
- JP-A- H04 271 765
- YOUSSEF M K ET AL: "Fat reduction in comminuted meat products-effects of beef fat, regular and pre-emulsified canola oil", MEAT SCIENCE, ELSEVIER SCIENCE, GB, vol. 87, no. 4, April 2011 (2011-04-01), pages 356 - 360, XP027596767, ISSN: 0309-1740, [retrieved on 20110111], DOI: 10.1016/J.MEATSCI.2010.11.011
- "Final Reports for Research Grants for Meat and Meat Products", vol. 36, 1 November 2018, THE ITO FOUNDATION, article SATOSHI KAWAHARA: "Study on flavor components of dry-aged beef", pages: 68 - 73, XP055634533

## Beschreibung

Die Erfindung betrifft ein Verfahren zum Herstellen von Würsten.

Im Stand der Technik sind eine Vielzahl an herkömmlichen Wurstzusammensetzungen und Verfahren zur Herstellung von Würsten bekannt. So wird in der DE 195 26 818 A1 ein Verfahren zur Herstellung und Verpackung von Rohwürsten, Brühwürsten, Kochwürsten, Bratwürsten usw. beschrieben, bei welchem die Rohprodukte im tiefgekühltem Zustand zerkleinert und vermischt werden, um einen Aromaverlust zu vermeiden.

Es ist des Weiteren ein Verfahren bekannt, gemäß dem alle Rohstoffkomponenten in einer der Rezeptur angepassten Reihenfolge in einem gefrorenen Zustand ebenso verarbeitet werden. Die Endtemperatur des Rohbrätes ist nach Abschluss der Zerkleinerung und des Vermengens der einzelnen Rezepturbestandteile so niedrig, dass das Rohbrät eine plastische oder flockige Konsistenz bei -10°C aufweist. Diese gefrorene Masse wird anschließend portioniert, geformt und in Hüllen verpackt, um anschließend der Erhitzung zugeführt zu werden. Diese industriell hergestellten Brätrohlinge können mittels leistungsfähiger Wurstfüller trotz tiefgefrorenem Zustand geformt werden.

DE 32 19 005 A1 betrifft ein Verfahren zur Herstellung von Frischwurstwaren, wobei vorerst der Fleischanteil mit dem entsprechenden Wasser- bzw. Eisanteil zu einem Brat verarbeitet, danach in ein Drittel des Brats der entsprechende Fettsubstanzanteil eingearbeitet und hierauf der abgetrennte zwei Drittelteil des Brats der Bratmasse wieder zugeschlagen wird, wobei bei der Herstellung des Brats bzw. bei der Einarbeitung der Fettsubstanz ein Zusatz von Emulgatoren unterbleibt, worauf das fertig zubereitete Brat portioniert oder in Wurstdärme abgefüllt und schließlich gebraten, gekocht oder geselcht wird. In das Brat wird als Fettsubstanzanteil Pflanzenöl durch langsames Vermengen mit dem Brat eingearbeitet.

JP H04 271 765 A offenbart eine Reifung von Rindfleisch, um gekühltes Rindfleisch mit ausgezeichnetem Geschmack zu erzeugen, das dem hochwertigen japanischen Rindfleisch entspricht, indem aus geschlachtetem und zerlegtem Rindfleisch usw. ein frischer Duft gebildet wird.

CH 703 388 A2 offenbart ein Verfahren zur Veredelung von Frischfleisch, wobei während der Reifung des Fleisches der Schimmelpilz Thamnidium elegans zugegeben wird, das Fleisch in einem Temperaturbereich zwischen 0 bis 8 °C gelagert wird, das Fleisch bei einer relativen Luftfeuchtigkeit zwischen 50% und 95% gelagert wird und das Fleisch zwischen 14 bis 100 Tagen gelagert wird.

Die bisher bekannten Produktionsmethoden zur Herstellung von Rohwürsten, Brühwürsten, Kochwürsten usw. beruhen auf der Annahme, dass die Temperatur des Rohbrätes während dessen Zerkleinerung und Vermengung möglichst tief sein muss, um aus den Einzelkomponenten ein homogenes, zusammenhängendes Gemenge entstehen zu lassen. Dieses Gemenge wird anschließend den üblichen Füllmaschinen auch bei -5 - 10°C zugeführt zwecks Portionierung desselben.

Es zeigt sich jedoch der Nachteil, dass derartig tiefe Rohbrättemperaturen eine gleichmäßige Befüllung der verwendeten Wursthüllen mit Rohbrät verhindern, so dass es bereits den dergestalt hergestellten Würste an optischer Qualität mangelt.

Ebenfalls zeigt es sich, dass das herkömmliche Rohbrät aufgrund der industriell vorgefertigten durchgeführten Bereitstellung von Portionen eine verschlechterte Sensorik zeigt, so dass die Zartheit und die Saftigkeit der Würste darunter leiden.

Das in der DE 195 28 818 A1 offenbarte Verfahren ermöglicht zwar die lufteinschlussfreie Verformung von tiefgefrorenen flockigen Rohbräten, die der Portionierung zugeführt werden, aber die Verformung des Rohbrätes zu Würsten unter Vermeidung von Lufteinschlüssen in demselben führt nicht zu der erwünschten Knackigkeit und Bissfestigkeit der Würste.

In der DE 295 17 815 U1 wird eine herkömmliche fettarme Wurstzubereitung offenbart, die Rindfleisch, Schwarte und Gemüse umfasst. Die herkömmliche fettarme Wurstzubereitung erfolgt, indem das gegarte Rindfleisch im noch heißem Zustand vermahlen, beispielsweise durch einen Fleischwolf gedreht, und mit Fleischbrühe vermischt wird, -im Fall des Auftretens eines Gewichtsverlustes-. Die Masse wird anschließend mit Nitritpökelsalz, Pfeffer, Koriander und sonstigen Gewürzen und auch Geschmacksverstärkern und Speisewürzen abgeschmeckt. Es zeigt sich, dass gerade solcherart industriell hergestellte Wurstzubereitungen das rindfleischige Aroma nicht dauerhaft beibehalten können, so dass auf Geschmacksverstärker, wie Glutamat und Speisewürze, zurückgegriffen werden muss, um dem Verbraucher ein angenehmes Mundgefühl und aromatischen Geschmack vorzugaukeln.

Das Rohbrät wird anschließend im Stand der Technik in Därme abgefüllt, für eine gewisse Zeitdauer mit Hitze beaufschlagt, im kalten Wasser zwecks Abkühlung abgeschreckt. Auch diese herkömmliche Wurstzubereitung zeigt neben dem unzureichenden Geschmack eine rasch sich optisch verändernde Schnittfläche nach Anschneiden der herkömmlichen Wurst, die, als Trockenrandbildung bezeichnet, für die fehlende Wurstqualität spricht.

Aufgabe der Erfindung soll es sein, eine Wurst bereitzustellen, die die hinreichende Zartheit und Saftigkeit bereithält und deren Aroma nicht beeinträchtigt wird.

Auch soll die bereitzustellende Wurst von dauerhafter hoher Geschmacklichkeit sein, trotz hinreichender Haltbarkeit,

Zusätzlich soll die bereitzustellende Wurst keine Trockenrandbildung aufweisen und deren Schnittfläche soll bei Anschnitt lange frisch bleiben.

Des Weiteren soll die bereitzustellende Wurst unter Berücksichtigung der Vorgaben der Deutschen Leitsätze für Wurst- und Fleischwaren hergestellt sein.

Schließlich soll die bereitzustellende Wurstzusammensetzung für jeden Benutzer zum Verzehr geeignet sein, unabhängig davon, ob der Benutzer christlichen, moslemischen oder jüdischen Glaubens ist.

Die Aufgaben werden gelöst durch den Hauptanspruch.

Gegenstand der Erfindung ist ein Verfahren zum Herstellen von Würsten, welches gekennzeichnet ist durch
a. Reifen von Rindfleisch und von Kalbfleisch durch Trocknen derselben für eine Zeitdauer von mindestens 19 oder 21 Tagen, wie 19 bis 42 Tage, lang ab Bereitstellung des freigelegten Rindfleisches bzw. Kalbfleisches bei einer Temperatur von 1°C bis 4°C,
b. Verwolfen von 40 bis 60 Gew.-anteilen gereiften Rindfleisches in einem Fleischwolf bei einer Temperatur von -3°C bis +2°C zur Bereitstellung eines Rindfleischgemenges,
c. Verwolfen von 10 bis 30 Gew.-anteilen gereiften Kalbfleisches in einem Fleischwolf bei einer Temperatur von -3°C bis +2°C zur Bereitstellung eines Kalbfleischgemenges,
d. Zugeben einer Gewürzmischung oder Teil derselben zu dem Rindfleischgemenge und Verkuttern in einem Kutter und anschließend Zugeben von 10 bis 20 Gew.-anteilen einer Eisschüttung zu dem Rindfleischgemenge und anschließendes Verkuttern zur Bereitstellung einer Fleischmischung für eine Zeitdauer, bis eine Temperatur von 0°C in der Fleischmischung sich einstellt,
e. Zugeben von 5 bis 20 Gew.-anteilen Rapsöl als Speiseöl zu der Fleischmischung und anschließendes Verkuttern zur Bereitstellung eines Verkutterungsgemisches für eine Zeitdauer, bis eine Temperatur in dem Verkutterungsgemisch von +1°C bis +8°C erreicht ist,
f. Zugeben einer Gewürzmischung oder Teil derselben zu dem Verkutterungsgemisch und anschließendes Verkuttern zur Bereitstellung eines Rohbräts für eine Zeitdauer, bis eine Temperatur in dem Rohbrät von +12°C bis +13°C erreicht ist,
g. Zugeben des Kalbfleischgemenges zu dem Rohbrät und anschließendes Verkuttern zur Bereitstellung einer Rohbrätmischung,
h. Abfüllen der Rohbrätmischung in einen Kollagendarm zur Bereitstellung von Rohwürsten,
i. Erhitzen der Rohwürste in Gegenwart von Heißdampf bei einer Temperatur von 72°C für eine Zeitdauer von 50 min lang zur Bereitstellung von Würsten,
j. Abkühlen der Würste in Gegenwart einer Wasserbeduschung bei einer Temperatur von 4 bis 6°C für eine Zeitdauer von 10 min lang oder Schockkühlen derselben bei 3°C für eine Zeitdauer von 1 bis 3 Stunden lang, wobei
die Würste 2,0 bis 5,0 Gew.-anteile Gewürzmischung enthalten.

Die Zusammensetzung oder Rezeptur zur Herstellung einer Wurst umfasst dry aged Rindfleisch, dry aged Kalbfleisch, Rapsöl, eine Eisschüttung und eine Gewürzmischung.

In einer nicht-erfindungsgemäßen Ausgestaltung der Zusammensetzung zur Herstellung von Würsten enthält die Zusammensetzung 50 Gew.-anteile dry-aged Rindfleisch, 20 Gew.-anteile Kalbfleisch, 15 Gew.-anteile Rapsöl, 18 Gew.-anteile Eisschüttung und eine Gewürzmischung, die auch 4,0 bis 4,5 Gew.-anteile, noch mehr bevorzugt 4,223 Gew.-anteile, umfassen kann. Im Sinne der Erfindung kann man unter Gew.-anteile auch Kilogramm oder Gewichtsteile verstehen. Unter Rindfleisch nach Reifung wird im Sinne der Erfindung auch Rindfleisch verstanden, welches unter den vorgenannten und nachfolgend aufgeführten Bedingungen reifte.

Für die Zusammensetzung zur Herstellung von Würsten wird Rindfleisch verwendet, welches beispielsweise Rinderrückenabschnitte oder sonstige Teilstücke, wie RII/RV und oder mit einer Fettstufe m 70/30 F enthalten kann; im Sinne der Erfindung kann unter Fettstufe m 70/30 F auch verstanden werden dass das Rindfleisch 70% Magerfleisch und 30% Fett aufweist, wobei F für Färse stehen kann. Gleichwohl kann als Rindfleisch auch dasjenige von Jungrindern, Jungbullen, Bullen, Kühen verwendet werden. Auch eignet sich Rindfleisch mit einer Fettstufe m 80/20.

Die Gewürzmischung kann eine Mischung mit Kochsalz und pflanzlichen Gewürzen, wie solche ohne Allergene, wie solche ohne Senf- oder Selleriebestandteile, umfassen. Als pflanzliche Gewürze eignen sich herkömmlicherweise die dem Fachmann bekannten Teile von Pflanzen, wie Kräutern, z.B. Rinde, Wurzeln, Stängel, Blätter, Blüten, Knospen, Früchte, Narben, Samen, usw. von Pflanzen, vorteilhafterweise die allergenfrei sind. In der Gewürzmischung können zwar auch herkömmliche Geschmacksverbesserer, wie Glutalin, enthalten sein; für die Gewürzmischung reichen aber bereits die pflanzlichen Gewürzen und Kochsalz zur Bereitstellung des erwünschten Geschmacks. In der Gewürzmischung kann gleichfalls ein Kutterhilfsmittel oder -kombinationsmittel, wie Bullin plus, ohne Allergene, enthalten sein.

In der Gewürzmischung kann zwecks Stabilisierung des pH-Wertes in der erfindungsgemäßen Zusammensetzung ein Derivat der Ascorbinsäure ohne Allergene, z.B. Bombal, enthalten sein.

Ganz besonders vorteilhaft sind reine pflanzliche Gewürze, die allergenfrei sind. Die erfindungsgemäße Zusammensetzung zeichnet sich auch durch die fehlende Zugabe von Farbstoffen, Aromastoffen aus, insbesondere künstlichen oder chemischen Aromastoffen, da die intensive Farbentstehung des Rindfleisches nach seiner Reifung der erfindungsgemäßen Zusammensetzung sine angenehme Rotfärbung verleiht, ohne dass Farbstoffzugaben erforderlich sind.

So kann als Gewürzmischung sich eine Mischung mit Kochsalz, Bullin Plus, z.B. mit Phosphatverbindung, als Emulgator, Bombal und Bratwurst Gewürz eignen. Vorzugsweise enthält die Gewürzmischung mindestens einen Vertreter der Speisesalz, pflanzliche Gewürze, ein Kutterkombinationsmittel auf Di- und Polyphosphatgrundlage mit Emulgator, ein Frischhaltemittel auf Acetatgrundlage und einen Geschmacksverbesserer, wie -stärker, umfassenden Gruppe. So kann die Gewürzmischung, z.B. für 50 Gew.-anteile dry-aged Rindfleisch, 20 Gew.-anteile Kalbfleisch, 15 Gew.-anteile Rapsöl, 18 Gew.-anteile Eisschüttung, enthalten
1,03 Gew.-anteile Kutterkombinationsmittel auf Di- und Polyphosphatgrundlage mit Emulgator, z.B. Bullin Plus von van Hees und/oder
0,412 Gew.-anteile Frischhaltemittel auf Acetatgrundlage, z.B Bombal von van Hees und/oder
0,103 Gew.-anteile Geschmacksverstärker, z.B Glutalin von van Hees, Derivate von 5'-Nukleotiden, Derivate von Glutaminsäure-Verbindungen
und/oder 2,06 Gew.-anteile Speisesalz und/oder
0,618 Gew.-anteile herkömmliches Bratwurst-Gewürz.

Für die Zusammensetzung und/oder das erfindungsgemäße Verfahren wird das Rindfleisch für einen Zeitraum von 19 bis 42 Tage, vorzugsweise 21 bis 40 Tage, noch mehr bevorzugt 25 bis 28 oder 19 oder 21 Tage, bei einer Temperatur von 1° bis 4°C, vorzugsweise 2° bis 4°C, noch mehr bevorzugt 2° oder 4°C gelagert, wie getrocknet. Der Zeitraum der Reifung kann mit dem Zeitpunkt der Schlachtung oder mit dem Zeitpunkt der Bereitstellung der aus dem Rind ausgelösten Teilstücke oder Fleischteile beginnen. Erfindungsgemäß beginnt er ab Bereitstellung des freigelegten Rindfleisches bzw. Kalbfleisches.

Der Zeitpunkt der Bereitstellung der ausgelösten Fleischteile kann im Sinne der Erfindung auch mit dem Zeitpunkt der Zerlegung des Rindes in seine Fleischteile oder mit dem Zeitpunkt des Antransports der Fleischteile an den Ort der Reifung nach Auslösung der Fleischteile aus dem Rind übereinstimmen, zumal das Rindfleisch aus -bezogen auf den Ort der Reifung- gebietsnaher Rinderhaltung und -schlachtung beigezogen werden kann.

Um auch einen hinreichend inneren Reifungsablauf in dem Rindfleisch oder der Fleischteile zu ermöglichen, beträgt die Reifungsdauer des Rindfleisches mindestens 19 oder 21 Tage ab o.g. Zeitpunkt der Bereitstellung, vorzugsweise 19 bis 42 Tage oder 21 bis 42 Tage, noch mehr bevorzugt 21 bis 30 Tage oder 21, 24 oder 25 Tage ab Auslösung der Fleischteile aus dem Rind und/oder ab erfolgtem Transport der Fleischstücke zum Ort der Reifung. Die Lagerung oder Reifung wird im Sinne der Erfindung auch dry aged genannt.

Unter Rindfleisch wird im Sinne der Erfindung auch Fleisch eines Rindes verstanden, welches Rind von der Zugabe der Flüssignahrung bereits abgesetzt ist und dem feste Nahrung, wie Heu, Gras oder dergleichen zugeführt wird. Das zu schlachtende Rind kann ein Alter von mehr 6 Monaten aufweisen.

Unter Kalbfleisch wird im Sinne der Erfindung auch Fleisch eines Kalbes verstanden, welchem Kalb Flüssignahrung, wie Milch, zugeführt wird. Das zu schlachtende Kalb kann ein Alter von 5 bis 6 Monaten aufweisen.

Der Fettanteil in dem zu reifenden Rindfleisch vor der Reifung kann von 10 bis 40 %, vorzugsweise 20 bis 35 %, noch mehr bevorzugt 20 oder 30 %, betragen.

So kann Kalbfleisch kann unter Anderem enthalten: 76,1% Wasser, 20,7% Eiweiße, 1,8% Fette, 0,083% Natrium, 0,355% Kalium, 0,015% Calcium, 0,206% Phosphor, 0,003% Eisen, wobei der Rest sonstige unwesentliche Inhaltsstoffe betrifft.

Die Luftfeuchtigkeit bei der Trocknung kann 60 bis 90 % betragen. Dieser schonende Trocknungsprozess des Rindfleisches, auch Reifung, Trockenalterung oder dry aged genannt, stellt ein zartes, wenn auch hinreichend bissfestes und knackiges, Rindfleisch unter Beibehaltung seines ursprünglichen Aromas für die erfindungsgemäße Zusammensetzung und das erfindungsgemäße Verfahren bereit. Vorteilhafterweise weist die erfindungsgemäße Zusammensetzung einen deutlichen Fleischgeschmack, der auch als Umami bezeichnet werden kann.

Da der Wasseranteil in dem Rindfleisch, mit 100% ab Reifung gleichgesetzt, nach der Reifung des Rindfleisches sich um bis zu 30% verringert, wird vorteilhafterweise der Fleischgeschmack in dem Rindfleisch nach der Reifung intensiviert. Außerdem kann im Laufe der Reifung des Rindfleisches eine Fett-Oxidation zu beobachtet werden, wodurch ein angenehm nussiger Geschmack beim Verzehr der Fleischdarreichungsformen sich einstellt.

Ein weiterer Vorteil ist auch die erhöhte Enzymaktivität während der Reifung. Nach dem Zerlegen des Rindes nach dessen Schlachtung das Rindfleisch kann sich durch die besonderen Bedingungen der Reifung, z.B. in einer Reifekammer, ein besonderer Fleischgeschmack entwickeln, der auch durch die enzymatischen Vorgänge in dem Rindfleisch während der Reifung bereitgestellt wird, auch wenn infolge der niedrigen Temperatur die enzymatischen Vorgänge in dem Rindfleisch sich verlangsamen. Da recht viel Wasser bei der Reifung aus dem Rindfleisch verdunstet, zeigt das Rindfleisch nach seiner Reifung eine besonders hohe Wasserbindungsfähigkeit, wodurch das Rindfleisch besonders saftig ist und sehr zart, da es während des erfindungsgemäßen Verfahrens zum Herstellen von Fleischdarreichungsformen rasch das mit Gewürzmitteln angereicherte Wasser aufzunehmen vermag.

Nach der Schlachtung des Rindes entsteht durch die mangelnde Durchblutung ein Mangel an Adenosintriphosphat (ATP), wodurch die Fasern des Rindfleisches sich zusammenziehen können und das Rindfleisch zäh ist. Im zweiten Schritt der Reifung, also nach Eintreten des ATP-Mangels, wird das noch vorhandene Glykogen im Rindfleisch mit Hilfe von noch vorhandenem Sauerstoff im Rindfleisch zu Milchsäure umgewandelt. Durch diesen biochemischen Vorgang wird das Rindfleisch sauer und die Enzyme, wie Proteasen, werden aktiv oder bleiben aktiv. Diese Enzyme, wie Proteasen, spalten die Muskelproteine, wodurch das Rindfleisch zart wird.

Durch das erfindungsgemäße Verfahren wird Rindfleisch behandelt, welches während der Reifung nicht mit Wasser und nicht mit einer wässrigen Phase in Kontakt kommt und daher auch als Dry Aging bezeichnet wird zum Unterschied zu herkömmlichen Verfahren, deren gereiftes Rindfleisch Wet Aging genannt wird.

Von dem Rindfleisch, dass in einer wässrigen und/oder öligen Phase herkömmlicherweise reift, unterscheidet sich das mit Hilfe des erfindungsgemäßen Verfahrens zudem gereifte Rindfleisch nicht nur durch den einzigartigen nussigen, sondern auch durch den unvergleichlich intensiven Rindfleischgeschmack, der sich zudem deutlich abhebt, von herkömmlicherweise gereiftem durch Vakuumieren gelagertem Rindfleisch.

Beim Dry Aging steht das Rindfleisch in ständigem Kontakt mit dem Luftsauerstoff, sodass eine Fettoxidation durch Aufnahme des Sauerstoffs in das Rindfleisch stattfinden und das Glykogen verbraucht werden können. Zudem kann die Milchsäure beim Dry Aging abgebaut werden, hingegen wird beim Aging im Vakuum oder beim Wet Aging die Säure wiederum in dem Rindfleisch verbleiben, wodurch das Fleisch zwar gereift ist, also zart sein kann, aber trotzdem unangenehm sauer schmeckt.

Die Eisschüttung weist Eisklumpen, -brocken, z.B. einheitlicher oder unterschiedlicher Größe und Form, auf.

Für die Zusammensetzung und/oder das erfindungsgemäße Verfahren wird auch das Kalbfleisch zur Bereitstellung von dry aged Kalbfleisch, für einen Zeitraum von 21 - 30 Tage, noch mehr bevorzugt 25 - 28 Tage, vorzugsweise bei eine Temperatur von 4°C, gelagert, wie getrocknet. Um auch einen hinreichend inneren Reifungsablauf im Kalbfleisch zu ermöglichen, beträgt die Reifungsdauer des Kalbfleisches mindestens 21 Tage. Die Luftfeuchtigkeit bei der Trocknung kann 60 bis 90 % betragen. Dieser schonende Trocknungsprozess des Kalbfleisches stellt ein zartes, wenn auch hinreichend bissfestes und knackiges, Kalbfleisch unter Beibehaltung seines ursprünglichen Aromas für die Zusammensetzung und das erfindungsgemäße Verfahren bereit.

Erfindungsgemäß wird das dry aged Rindfleisch in einem Fleischwolf bei einer Temperatur von -3°C bis +2°C zerkleinert. So kann das Rindfleisch in einem Fleischwolf mit einer Scheibendicke von 2-5 mm, vorzugsweise 3 bis 4 mm, noch mehr bevorzugt 2 oder 3 mm, bevorzugterweise bei einer Temperatur von -2°C, zur Bereitstellung eines Rindfleischgemenges verwolft werden. Zum Verwolfen kann ein herkömmlicher Fleischwolf verwendet werden, der als Zerschneidungs- oder - kleinerungsmaschine nach dem sogenannten Wolfprinzip arbeiten kann. Bei dem Wolfprozess oder Verwolfungsvorgang erfolgt einerseits eine Förderung des Rindfleisches als Aufgabegut und andererseits eine Zerkleinerung des aufgegebenen Rindfleisches. Die Scheibe des Fleischwolfes kann -je nach Erfordernis der Wurst oder sonstiger Fleischdarreichungsformen- eine unterschiedliche Scheibendicke aufweisen, um z.B. für die Bereitstellung von feinen oder kleinen Fleischstücken eine geringe Scheibendicke, wie 2mm, oder für die von groben oder größeren Fleischstücken eine große Scheibendicke, wie 4 mm, zu ermöglichen.

Ebenso wird erfindungsgemäß das dry aged Kalbfleisch in einem Fleischwolf bei einer Temperatur von -3°C bis +2°C zerkleinert. So kann das Kalbfleisch in einem Fleischwolf mit einer Scheibendicke mit einer Scheibendicke von 2 - 5 mm, vorzugsweise 3 mm, vorzugsweise bei einer Temperatur von -2°C, zur Bereitstellung eines Kalbfleischgemenges verwolft werden. Bevorzugterweise kann das Kalbfleisch unter denselben Zerkleinerungsbedingungen wie das Rindfleisch verwolft werden. Für das erfindungsgemäße Verfahren eignen sich besonders Kalbfleischabschnitte KAII, z.B. mit einer Fettstufe von 80/20 F.

Auch können das Rindfleisch und das Kalbfleisch zusammen in einem Schritt zerkleinert werden. So können sie in einem Fleischwolf, insbesondere mit einer Scheibendicke von 2 - 5 mm, vorzugsweise 3 mm, bevorzugterweise bei einer Temperatur von -2°C, zur Bereitstellung eines Fleischgemenges zerkleinert, wie verwolft, werden.

Auch kann das Rindfleisch und das Kalbfleisch voneinander getrennt verwolft werden, in dem Fleischwolf verwolft werden, wobei, z.B. mit einer Scheibendicke von 2 bis 4 mm, vorzugsweise von 4 mm, noch mehr bevorzugt von 3 mm, bei einer Temperatur von -3° bis +2°C, vorzugsweise -3° bis 0°C, noch mehr bevorzugt -2°C, 0°C oder +1°C, zur Bereitstellung eines Fleischgemenges.

In einem weiteren Schritt des erfindungsgemäßen Verfahrens werden das Rindfleischgemenge zusammen mit einer Gewürzmischung oder einem Teil derselben, die Speisesalz, Bullin Plus, Bombal enthalten kann, in einem herkömmlichen Kutter verkuttert, auch gekuttert genannt; vorzugsweise erfolgt das Verkuttern bei 800 bis 1200 rpm (Umdrehungen pro Minute), vorzugsweise bei 1000 oder 1100 rpm, wie mindestens eines der Messer; das Verkuttern kann für eine Zeitdauer, z.B. von 3 bis 4 Minuten oder 3 bis 4 Runden, lang andauern. Zum Verkuttern wird ein herkömmlicher Kutter verwendet, der ein Gefäß umfasst, in dem eine Anordnung von Messern mit hoher Geschwindigkeit rotieren kann. Die Rotation der Messer führt zu einer Zerkleinerung bis hin zu einer breiigen Konsistenz. Während des Kutterns oder des Verkutterns werden die Bestandteile gut miteinander vermischt; die Umdrehungen pro Minute, bzw. die Geschwindigkeit der Messer und Zeitdauer des Verkutterns können auch abhängen von dem erwünschten Maß an breiiger Konsistenz von z.B. Fleischgemenge, Fleischmischung, Verkutterungsgemisch, Rohbrät und/oder Rohbrätmischung und/oder der sich einstellenden Temperatur derselben beim Verkuttern.

Anschließend werden 10 bis 20 Gew.-anteile einer Eisschüttung dem Fleischgemenge zugegeben und das Verkuttern kann bei 3000 bis 4000 rpm, vorzugsweise 3500 oder 4000 rpm, zur Bereitstellung einer Fleischmischung erfolgen; wobei das Verkuttern so lange andauert, bis eine Temperatur von 0°C in der Fleischmischung sich einstellt.

In einem weiteren Schritt des erfindungsgemäßen Verfahrens werden der Fleischmischung 5 bis 20 Gew.-anteile Rapsöl als Speiseöl bei 0°C zugegeben und bei 800 bis 1200 rpm, vorzugsweise bei 1000 oder 1100 rpm, verkuttert bis eine Temperatur in dem Verkutterungsgemisch von +1 °C bis +8°C erreicht ist; das Verkuttern kann für eine Zeitdauer, z.B. von 3 bis 4 Minuten oder 5 bis 6 Runden, lang andauern. Danach kann das erneute Verkuttern bei 3000 bis 4000 rpm, vorzugsweise 3500 oder 4000 rpm, zur Bereitstellung eines Verkutterungsgemisches erfolgen, bis eine Temperatur in dem Verkutterungsgemisch von +8°C erreicht wird. Das Verkuttern bei hoher Umdrehung kann länger andauern als das bei niedrigerer Umdrehung. So kann das Verkuttern auch für eine Zeitdauer, vorzugsweise von 5 bis 6 Minuten oder 5 bis 6 Runden, lang erfolgen.

In einem weiteren Schritt des erfindungsgemäßen Verfahrens wird eine Gewürzmischung oder ein Teil derselben zu dem Verkutterungsgemisch zugegeben und zur Bereitstellung eines Rohbräts für eine Zeitdauer, bis eine Temperatur in dem Rohbrät von +12°C bis +13°C erreicht ist, verkuttert. Die Gewürzmischung oder ein Teil derselben, die Bratwurst Gewürz und Glutalin enthalten kann, kann bei einer Temperatur in dem Verkutterungsgemisch von +8°C zugegeben werden und das Verkuttern wird zur Bereitstellung eines Rohbräts weitergeführt, bis eine Temperatur in dem Rohbrät von +12°C bis 13°C erreicht wird. Das Verkuttern kann bei 3000 bis 4000 rpm, vorzugsweise 3500 oder 4000 rpm, erfolgen.

In einem weiteren Schritt des erfindungsgemäßen Verfahrens wird dem im Kutter befindlichen Rohbrät, welches eine Temperatur von +12°C aufweist, das Kalbfleischgemenge zugegeben und zur Bereitstellung einer Rohbrätmischung verkuttert;
die Verkutterung kann 800 bis 1200 rpm (Umdrehungen pro Minute), vorzugsweise bei 1000 oder 1100 rpm erfolgen; das Verkuttern kann für eine Zeitdauer von 5 bis 6 Minuten oder 5 bis 6 Runden lang andauern.

Erfindungsgemäß wird die Rohbrätmischung in einen Kollagendarm zur Bereitstellung von Rohwürsten abgefüllt. Neben Kollagendärmen eignen sich auch Schafdärme, z.B. Saitlinge (nicht erfindungsgemäß).

Als Kollagendarm kann eine natürliche Umhüllung aus essbarer Kollagenschicht verwendet werden, z.B. kann die Kollagenschicht aus dem Corium von Rinderhäuten gewonnen werden, welches der Teil aus dem Unterhaut-Bindegewebe ist und ein inniges Geflecht von Kollagenfasern bereithält, so dass diese zu Wursthüllen leicht verarbeitet werden können und geschmacksneutral für den Verbraucher vorteilhafterweise sind.

In einem weiteren Schritt werden die Rohwürste in Gegenwart von Heißdampf bei einer Temperatur von 72°C für eine Zeitdauer von 50 min lang, zur Bereitstellung von Würsten heißbehandelt.

Das Heißbehandeln der Rohwürste dient im Wesentlichen deren schonenden Haltbarmachung. Nach dem Heißbehandeln schließt sich abschließend das Abkühlen der Würste an.

So werden in einem weiteren Schritt des erfindungsgemäßen Verfahrens die Würste in Gegenwart einer Wasserbeduschung bei einer Temperatur von 4 bis 6°C für eine Zeitdauer von 10 min lang abgekühlt.

Die Wasserbeduschung umfasst z.B. das Benetzen der Rohwürste mit einer Berieselung gekühlten Wassers. Auch können die Würste zusätzlich oder alternativ zu der Wasserbeduschung schockgekühlt werden bei 3°C für eine Zeitdauer von 1 bis 3 Stunden lang.

Gerade das kontrollierte Reifen des Rindfleisches durch Trocknung führt dazu, dass den bereitzustellenden Würsten kein holziger Nebengeschmack zu eigen ist, der häufig bei herkömmlichen Würsten mit einem Anteil von z.B. geräuchertem Fleisch zu eigen ist.

Das erfindungsgemäße Verfahren zum Herstellen von Würsten kann gekennzeichnet sein durch
a. Reifen von Rindfleisch und von Kalbfleisch durch Trocknen derselben für eine Zeitdauer von mindestens 21 Tagen lang bei einer Temperatur von 4°C,
b. wie Verwolfen von 40 bis 60 Gew.-anteilen gereiften Rindfleisches in einem Fleischwolf, vorzugsweise mit einer Scheibendicke von 2 bis 4 mm, bevorzugterweise von 3 mm, bei einer Temperatur von -2,0°C zur Bereitstellung eines Rindfleischgemenges,
c. Verwolfen von 10 bis 30 Gew.-anteilen gereiften Kalbfleisches in einem Fleischwolf, vorzugsweise mit einer Scheibendicke von 2 bis 4 mm, bevorzugterweise von 3 mm, bei einer Temperatur von -2,0°C zur Bereitstellung eines Kalbfleischgemenges,
d. Zugeben einer Gewürzmischung oder Teil derselben zu dem Rindfleischgemenge und Verkuttern in einem Kutter, z.B. bei 1000 rpm, und anschließend Zugeben von 10 bis 20 Gew.-anteilen einer Eisschüttung zu dem Rindfleischgemenge und Verkuttern, z.B. bei 3500 rpm, zur Bereitstellung einer Fleischmischung für eine Zeitdauer, bis eine Temperatur von 0°C in der Fleischmischung sich einstellt,
e. Zugeben von 5 bis 20 Gew.-anteilen Rapsöl als Speiseöl zu der Fleischmischung und Verkuttern, z.B. bei 1000 rpm, und dann, z.B. bei 3500 rpm, zur Bereitstellung eines Verkutterungsgemisches für eine Zeitdauer, bis eine Temperatur in dem Verkutterungsgemisch von +8°C erreicht ist,
f. Zugeben einer Gewürzmischung oder Teil derselben zu dem Verkutterungsgemisch und Verkuttern, z.B. bei 3500 rpm, zur Bereitstellung eines Rohbräts für eine Zeitdauer, bis eine Temperatur in dem Rohbrät von +12°C bis 13°C erreicht ist,
g. Zugeben von 10 bis 30 Gew.-anteilen Kalbfleischgemenge zu dem Rohbrät und Verkuttern, z.B. bei 1000 rpm, zur Bereitstellung einer Rohbrätmischung,
h. Abfüllen der Rohbrätmischung in einen Kollagendarm zur Bereitstellung von Rohwürsten,
i. Erhitzen der Rohwürste in Gegenwart von Heißdampf bei einer Temperatur von 72°C für eine Zeitdauer von 50 min lang zur Bereitstellung von Würsten,
j. Abkühlen der Würste in Gegenwart einer Wasserbeduschung bei einer Temperatur von 4 bis 6°C für eine Zeitdauer von 10 min lang und/oder Schockkühlen derselben bei 3°C für eine Zeitdauer von 1 bis 3 Stunden lang.

Eine besondere Ausgestaltung des erfindungsgemäßen Verfahrens ist gekennzeichnet durch
a. Reifen von Rindfleisch und von Kalbfleisch durch Trocknen derselben für eine Zeitdauer von mindestens 21 Tagen lang bei einer Temperatur von 4°C,
b. Verwolfen von 50 Gew.-anteilen gereiften Rindfleisches in einem Fleischwolf bei einer Temperatur von -2,0°C zur Bereitstellung eines Rindfleischgemenges,
c. Verwolfen von 20 Gew.-anteilen gereiften Kalbfleisches in einem Fleischwolf bei einer Temperatur von -2,0°C zur Bereitstellung eines Kalbfleischgemenges,
d. Zugeben einer 3,502 Gew.-anteilen Gewürzmischung oder Teil derselben zu dem Rindfleischgemenge und Verkuttern in einem Kutter und anschließend Zugeben von 18 Gew.-anteilen einer Eisschüttung zu dem Rindfleischgemenge und Verkuttern zur Bereitstellung einer Fleischmischung für eine Zeitdauer, bis eine Temperatur von 0°C in der Fleischmischung sich einstellt.
e. Zugeben von 15 Gew.-anteilen Rapsöl als Speiseöl zu der Fleischmischung und Verkuttern zur Bereitstellung eines Verkutterungsgemisches für eine Zeitdauer, bis eine Temperatur in dem Verkutterungsgemisch von +8°C erreicht ist.
f. Zugeben einer 0,731 Gew.-anteilen Gewürzmischung oder Teil derselben zu dem Verkutterungsgemisch und Verkuttern zur Bereitstellung eines Rohbräts für eine Zeitdauer, bis eine Temperatur in dem Rohbrät von +12°C bis 13°C erreicht ist,
g. Zugeben von 20 Gew.-anteilen Kalbfleischgemenge zu dem Rohbrät und Verkuttern zur Bereitstellung einer Rohbrätmischung,
h. Abfüllen der Rohbrätmischung in einen Kollagendarm zur Bereitstellung von Rohwürsten,
i. Erhitzen der Rohwürste in Gegenwart von Heißdampf bei einer Temperatur von 72°C für eine Zeitdauer von 50 min lang zur Bereitstellung von Würsten,
j. Abkühlen der Würste in Gegenwart einer Wasserbeduschung bei einer Temperatur von 4 bis 6°C für eine Zeitdauer von 10 min lang und/oder Schockkühlen derselben bei 3°C für eine Zeitdauer von 1 bis 3 Stunden lang.

Eine ganz besondere Ausgestaltung des erfindungsgemäßen Verfahrens ist gekennzeichnet durch
a. Reifen von Rindfleisch und von Kalbfleisch durch Trocknen derselben für eine Zeitdauer von mindestens 21 Tagen lang bei einer Temperatur von 4°C,
b. Verwolfen von 50 Gew.-anteilen gereiften Rindfleisches in einem Fleischwolf, vorzugsweise mit einer Scheibendicke von 2 bis 4mm, bevorzugterweise von 3 mm, bei einer Temperatur von -2,0°C zur Bereitstellung eines Rindfleischgemenges,
c. Verwolfen von 20 Gew.-anteilen gereiften Kalbfleisches in einem Fleischwolf, vorzugsweise mit einer Scheibendicke von 2 bis 4mm, bevorzugterweise von 3 mm, bei einer Temperatur von -2,0°C zur Bereitstellung eines Kalbfleischgemenges,
d. Zugeben einer 3,502 Gew.-anteilen Gewürzmischung oder Teil derselben, z.B. 2,06 Gew.-anteilen Speisesalz und/oder 1,03 Gew.-anteilen Kutterkombinationsmittel auf Di- und Polyphosphatgrundlage mit Emulgator, z.B. Bullin Plus von van Hees und/oder 0,412 Gew.-anteilen Frischhaltemittel auf Acetatgrundlage, z.B Bombal von van Hees, zu dem Rindfleischgemenge und Verkuttern in einem Kutter, z.B. bei 1000 rpm, und anschließend Zugeben von 18 Gew.-anteilen einer Eisschüttung zu dem Rindfleischgemenge und Verkuttern, z.B. bei 3500 rpm, zur Bereitstellung einer Fleischmischung für eine Zeitdauer, bis eine Temperatur von 0°C in der Fleischmischung sich einstellt,
e. Zugeben von 15 Gew.-anteilen Rapsöl als Speiseöl zu der Fleischmischung und Verkuttern, z.B. bei 1000 rpm, und dann, z.B. bei 3500 rpm, zur Bereitstellung eines Verkutterungsgemisches für eine Zeitdauer, bis eine Temperatur in dem Verkutterungsgemisch von +8°C erreicht ist,
f. Zugeben einer 0,731 Gew.-anteilen Gewürzmischung, wie 0,103 Gew.-anteile Geschmacksverstärker, z.B Glutalin von van Hees, Derivate von 5'-Nukleotiden, Derivate von Glutaminsäure-Verbindungen, und/oder 0,618 Gew.-anteile herkömmliches Bratwurst-Gewürz, oder Teil derselben zu dem Verkutterungsgemisch und Verkuttern, z.B. bei 3500 rpm, zur Bereitstellung eines Rohbräts für eine Zeitdauer, bis eine Temperatur in dem Rohbrät von +12°C bis 13°C erreicht ist,
g. Zugeben von 20 Gew.-anteilen Kalbfleischgemenge zu dem Rohbrät und Verkuttern, z.B. bei 1000 rpm, zur Bereitstellung einer Rohbrätmischung,
h. Abfüllen der Rohbrätmischung in einen Kollagendarm zur Bereitstellung von Rohwürsten,
i. Erhitzen der Rohwürste in Gegenwart von Heißdampf bei einer Temperatur von 72°C für eine Zeitdauer von 50 min lang zur Bereitstellung von Würsten,
j. Abkühlen der Würste in Gegenwart einer Wasserbeduschung bei einer Temperatur von 4 bis 6°C für eine Zeitdauer von 10 min lang und/oder Schockkühlen derselben bei 3°C für eine Zeitdauer von 1 bis 3 Stunden lang.

Das erfindungsgemäße Verfahren hat unter anderem die Vorteile von:
dauerhafter Farbhaltung der Würste,
geringer Tropfsaftanteil,
erhöhter Stabilität gegenüber Keimen,
hoher Haltbarkeit,
guter Knackigkeit und Bissfestigkeit,
verbesserter Sensorik in Bezug auf Zartheit der Würste,
fehlender Trockenrandbildung bei Anschnitt
im Vergleich zu herkömmlich hergestellten Würsten zeigt sich eine verbesserte Sensorik in Bezug auf Zartheit und Saftigkeit der Würste.

### Ausführungsbeispiele:

Die Ausführungsbeispiele offenbaren in schematischer Weise, ohne Anspruch auf eine genaue Wiedergabe eine Ausgestaltung der Zusammensetzung und des erfindungsgemäßen Verfahrens.

Ein Ausführungsbeispiel der Zusammensetzung zur Herstellung von Würsten enthält 50 kg dry-aged Rindfleisch, 20 kg dry aged Kalbfleisch, 15 kg Rapsöl, 18 kg Eisschüttung, 1030 g Kutterkombinationsmittel auf Di- und Polyphosphatgrundlage mit Emulgator, z.B. Bullin Plus von van Hees, 412 g Frischhaltemittel auf Acetatgrundlage, z.B. Bombal von van Hees, ggf. 103 g Geschmacksverbesserer, z.B Glutalin von van Hees, Derivate von 5'-Nukleotiden und/oder Derivate von Glutaminsäure-Verbindungen, 2060 g Speisesalz, 618 g herkömmliches Bratwurst-Gewürz.

Ein weiteres Ausführungsbeispiel der Zusammensetzung zur Herstellung von Würsten enthält 50 kg dry-aged Rindfleisch, 20 kg dry aged Kalbfleisch, 15 kg Rapsöl, 18 kg Eisschüttung, 2060 g Speisesalz und 2163 g pflanzliche Gewürze.

In einem weiteren Ausführungsbeispiel wird nach dem erfindungsgemäßen Verfahren 50 kg Rindfleisch, z.B. mit einer Fettstufe von m 70/30 F als dry-aged-Abschnitt, z.B. RII/RV, für einen Zeitraum von mindestens 21 Tagen bei einer Temperatur von 4°C gelagert. Die Luftfeuchtigkeit bei der Trocknung kann 80 oder 90 % betragen.

50 kg dry aged Rindfleisch wird in einem herkömmlichen Fleischwolf mit einer Scheibendicke von 3 mm zur Bereitstellung der Rindfleischgemenge verwolft bei einer Temperatur von +2°C oder weniger.

Auch 20 kg dry aged Kalbfleisch, wie KA II, mit einer Fettstufe m 80/20 F wird mit einer Scheibendicke des Fleischwolfes von 3 mm verwolft bei einer Temperatur von +2°C oder weniger, z.B. -2°C, zur Bereitstellung von Kalbfleischgemenge.

Das Rindfleischgemenge wird mit 2060 g Speisesalz, 1030g Kutterkombinationsmittel auf Di- und Polyphosphatgrundlage mit Emulgator, z.B. Bullin Plus von van Hees, 412 Gew.-anteile Frischhaltemittel auf Acetatgrundlage, z.B Bombal von van Hees, in einem herkömmlichen Kutter bei 1000 rpm zur Bereitstellung der Fleischgemenge verkuttert.

Dann wird 18 kg eine Eisschüttung dem Fleischgemenge zugegeben und dieses bei 3500 rpm zur Bereitstellung der Fleischmischung verkuttert, bis eine Temperatur von 0°C in der Fleischmischung sich einstellt.

Danach wird der Fleischmischung 15 kg Rapsöl bei 0°C zugegeben und langsam verkuttert, wie bei 1000 rpm, für eine Zeitdauer, dann bei 3500 rpm zur Herstellung des Verkutterungsgemisches verkuttert für eine Zeitdauer, bis eine Temperatur in dem Verkutterungsgemisch von +8°C erreicht ist; die Verkutterung kann bei Raumtemperatur bei 20°C oder in einem Kühlraum bei 4°C stattfinden.

Dann wird bei einer Temperatur in dem Verkutterungsgemisch von +8°C eine Gewürzmischung oder ein Teil derselben, die 618g herkömmliches Bratwurst-Gewürz und 103g Geschmacksverstärker, z.B Glutalin von van Hees, enthalten kann, zugegeben und die Verkutterung zur Bereitstellung von Rohbrät bei 3500 rpm erfolgt, bis eine Temperatur in dem Rohbrät von +12°C bis 13°C erreicht ist. Die Verkutterung kann bei Raumtemperatur, z.B. bei 20°C, oder in einem Kühlraum bei 4°C stattfinden.

Dem in dem Kutter befindlichen Rohbrät, welches eine Temperatur von +12°C aufweist, wird das Kalbfleischgemenges zugegeben und zur Bereitstellung der Rohbrätmischung langsam miteinander vermischt, wie bei 1100 rpm verkuttert.

Die Rohbrätmischung ist füllfertig und wird in einen Kollagendarm zur Bereitstellung der Rohwürste abgefüllt und die Rohwürste in Gegenwart von Heißdampf bei einer Temperatur von 72°C für eine Zeitdauer von 50 min lang zur Bereitstellung der Würste heißbehandelt.

Danach werden die Würste in Gegenwart einer Wasserbeduschung bei einer Temperatur von 4 bis 6°C für eine Zeitdauer von 10 min lang abgekühlt.

In einem anderen Ausführungsbeispiel (nicht erfindungsgemäß) wird 50 kg gereiftes Rindfleisch in dem Fleischwolf bei einer Temperatur von -2,0°C zur Bereitstellung eines Rindfleischgemenges verwolft, werden dem Rindfleischgemenge als Gewürzmischung 2060 g Speisesalz und 2163 g oder 2203 g pflanzliche Gewürze zugegeben und in dem Kutter verkuttert und anschließend nach Zugeben einer Eisschüttung zu dem Rindfleischgemenge und zur Bereitstellung einer Fleischmischung verkuttert für eine Zeitdauer, bis eine Temperatur von 0°C in der Fleischmischung sich einstellt, wobei die weiteren Schritte, wie oben angegeben, sich anschließen.

In anderen Ausführungsbeispielen (nur erfindungsgemäß insofern alle Schritte nach Anspruch 1 durchgeführt werden) wird dem Rindfleischgemenge mit 50 kg dry aged Rindfleisch statt 2060 g Speisesalz und 2163 g oder 2203 g pflanzliche Gewürze als Gewürzmischung nur Teil derselben zugegeben und wird dieses verkuttert, wie oben bereits ausgeführt, so dass in dem späteren Schritt dem Verkutterungsgemisch der restliche noch nicht zuvor zugegebene Teil der Gewürzmischung zugegeben und dieses zur Bereitstellung des Rohbräts verkuttert werden, wobei die weiteren Schritte, wie oben angegeben, sich anschließen.

In ganz anderen Ausführungsbeispielen (nur erfindungsgemäß insofern alle Schritte nach Anspruch 1 durchgeführt werden) werden dem Rindfleischgemenge als Gewürzmischung 2060 g Speisesalz, 1070g Kutterhilfsmittel, keine Allergene enthaltend, und zwecks Stabilisierung des pH-Wertes in der erfindungsgemäßen Zusammensetzung 412 g ein Derivat der Ascorbinsäure, keine Allergene enthaltend, zugegeben werden, und verkuttert, wie oben bereits ausgeführt, so dass in dem späteren Schritt dem Verkutterungsgemisch 721 g pflanzliche Gewürze oder stattdessen 103 g Geschmacksverbesserer und 618 g pflanzliche Gewürze oder Bratwurstgewürz zugegeben und dieses zur Bereitstellung des Rohbräts verkuttert werden, wobei die weiteren Schritte, wie oben angegeben, sich anschließen.

Weitere Ausführungsbeispiele umfassen 50 kg gereiftes Rindfleisch mit 20 kg gereiftem Kalbfleisch (nur erfindungsgemäß insofern alle Schritte nach Anspruch 1 durchgeführt werden); auch offenbart aber nicht erfindungsgemäß sind Ausführungsbeispiele mit nur 70 kg gereiftem Rindfleisch oder nur 70 kg gereiftem Kalbfleisch.

Das erfindungsgemäße Verfahren und die Zusammensetzung zur Herstellung von Würsten zeichnen sich aus, dass
dauerhaft das Aroma, insbesondere das fleischige dry-aged Rindfleischaroma, beibehalten bleibt,
Beibehaltung des intensiven fleischigen Aromas durch das dry-aged Rindfleisch ermöglicht wird,
die Zartheit und Saftigkeit der Würste unverändert sind,
die Würste bissfest und knackig verbleiben,
nach dem Anschneiden der erfindungsgemäßen Würste die Schnittfläche der Würste länger frisch bleiben und nicht auszutrocknen vermögen,
die Würste für jedweden Benutzer, unabhängig von dessen Religionszugehörigkeit, verzehrt werden können,
die hohe dauerhafte Geschmacklichkeit erhalten bleibt, sowie keine industrielle Fertigung ermöglicht ist.

## Patentansprüche

1. Verfahren zum Herstellen von Würsten, **gekennzeichnet durch**
a. Reifen von Rindfleisch und von Kalbfleisch durch Trocknen derselben für eine Zeitdauer von mindestens 19 oder 21 Tagen, wie 19 bis 42 Tage, lang ab Bereitstellung des freigelegten Rindfleisches bzw. Kalbfleisches bei einer Temperatur von 1°C bis 4°C,
b. Verwolfen von 40 bis 60 Gew.-anteilen gereiften Rindfleisches in einem Fleischwolf bei einer Temperatur von -3°C bis +2°C zur Bereitstellung eines Rindfleischgemenges,
c. Verwolfen von 10 bis 30 Gew.-anteilen gereiften Kalbfleisches in einem Fleischwolf bei einer Temperatur von -3°C bis +2°C zur Bereitstellung eines Kalbfleischgemenges,
d. Zugeben einer Gewürzmischung oder eines Teils derselben zu dem Rindfleischgemenge und Verkuttern in einem Kutter und anschließend Zugeben von 10 bis 20 Gew.-anteilen einer Eisschüttung zu dem Rindfleischgemenge und anschließendes Verkuttern zur Bereitstellung einer Fleischmischung für eine Zeitdauer, bis eine Temperatur von 0°C in der Fleischmischung sich einstellt,
e. Zugeben von 5 bis 20 Gew.-anteilen Rapsöl als Speiseöl zu der Fleischmischung und Verkuttern zur Bereitstellung eines Verkutterungsgemisches für eine Zeitdauer, bis eine Temperatur in dem Verkutterungsgemisch von +1°C bis +8°C erreicht ist,
f. Zugeben einer Gewürzmischung oder eines Teils derselben zu dem Verkutterungsgemisch und Verkuttern zur Bereitstellung eines Rohbräts für eine Zeitdauer, bis eine Temperatur in dem Rohbrät von +12°C bis +13°C erreicht ist,
g. Zugeben des Kalbfleischgemenges zu dem Rohbrät und anschließendes Verkuttern zur Bereitstellung einer Rohbrätmischung,
h. Abfüllen der Rohbrätmischung in einen Kollagendarm zur Bereitstellung von Rohwürsten,
i. Erhitzen der Rohwürste in Gegenwart von Heißdampf bei einer Temperatur von 72°C für eine Zeitdauer von 50 min lang zur Bereitstellung von Würsten,
j. Abkühlen der Würste in Gegenwart einer Wasserbeduschung bei einer Temperatur von 4 bis 6°C für eine Zeitdauer von 10 min lang oder Schockkühlen derselben bei 3°C für eine Zeitdauer von 1 bis 3 Stunden lang, wobei
k. die Würste 2,0 bis 5,0 Gew.-anteile Gewürzmischung enthalten.

## Claims

1. Method for producing sausages, **characterized by**:
a. maturing beef meat and veal meat by drying them for a period of at least 19 or 21 days, for example from 19 to 42 days, starting from the supply of the beef meat or veal meat exposed to a temperature of 1 °C to 4 °C,
b. mincing the mature beef meat in an amount of 40 to 60 % by weight in a meat grinder at a temperature of -3 °C to +2 °C to provide a quantity of beef meat,
c. mincing the mature veal meat in an amount of 10 to 30 % by weight in a meat grinder at a temperature of -3 °C to +2 °C to provide a quantity of veal meat,
d. adding a spice mixture or a part thereof to the quantity of beef meat and cutting in a bowl cutter, then adding 10 to 20 % by weight of ice to the quantity of beef meat and then cutting to provide a meat mixture for a certain duration until a temperature of 0 °C is reached in the meat mixture,
e. adding 5 to 20 % by weight of rapeseed oil as edible oil to the meat mixture and cutting to provide a cutting mixture for a certain duration until a temperature of +1 °C to +8 °C is reached in the cutting mixture,
f. adding a spice mixture or a part thereof to the cutting mixture and cutting to provide a raw sausage meat for a certain duration until a temperature of +12 °C to +13 °C is reached in the raw sausage meat,
g. adding the veal meat mixture to the raw sausage meat and then cutting to provide a raw sausage meat mixture,
h. transferring the raw sausage meat mixture into a collagen casing to provide raw sausages,
i. heating the raw sausages in the presence of very hot steam at a temperature of 72 °C for 50 minutes to provide sausages,
j. cooling the sausages in the presence of a water jet at a temperature of 4 to 6 °C for 10 minutes or shock-cooling them to 3 °C for 1 to 3 hours, wherein
k. the sausages contain 2.0 to 5.0 % by weight of the spice mixture.

## Revendications

1. Procédé de fabrication de saucisses, **caractérisé par**
a. la maturation de viande de bœuf et de viande de veau par séchage de celles-ci pendant une période d'au moins 19 ou 21 jours, par exemple de 19 à 42 jours, à partir de la fourniture de la viande de bœuf ou de la viande de veau exposée à une température de 1 °C à 4 °C,
b. le hachage de la viande de bœuf mature à 40 à 60 % en poids dans un hachoir à viande à une température de -3 °C à + 2 °C pour fournir une quantité de viande de bœuf,
c. le hachage de la viande de veau mature à 10 à 30 % en poids dans un hachoir à viande à une température de -3 °C à + 2 °C pour fournir une quantité de viande de veau,
d. l'ajout d'un mélange d'épices ou d'une partie de celui-ci à la quantité de viande de bœuf et la découpe dans un coupe-viande, puis l'ajout de 10 à 20 % en poids de glace à la quantité de viande de bœuf puis la découpe pour fournir un mélange de viande pendant une certaine durée jusqu'à ce qu'une température de 0 °C soit atteinte dans le mélange de viande,
e. l'ajout de 5 à 20 % en poids d'huile de colza comme huile alimentaire au mélange de viande et la découpe pour fournir un mélange de découpe pendant une certaine durée jusqu'à ce qu'une température de +1 °C à +8 °C soit atteinte dans le mélange de découpe.
f. l'ajout d'un mélange d'épices ou d'une partie de celui-ci au mélange de découpe et la découpe pour fournir une chair à saucisse crue pendant une certaine durée jusqu'à ce qu'une température de +12 °C à +13 °C soit atteinte dans la chair à saucisse crue,
g. l'ajout du mélange de viande de veau à la chair à saucisse crue puis la découpe pour fournir un mélange de chair à saucisse crue,
h. le transvasement du mélange de chair à saucisse crue dans un boyau de collagène pour fournir des saucisses crues,
i. le chauffage des saucisses crues en présence de vapeur très chaude à une température de 72 °C pendant 50 minutes pour fournir des saucisses,
j. le refroidissement des saucisses en présence d'un jet d'eau à une température de 4 à 6 °C pendant 10 minutes ou leur refroidissement brutal à 3 °C pendant 1 à 3 heures, dans lequel
k. les saucisses contiennent 2,0 à 5,0 % en poids du mélange d'épices.
